Europäisches Patentamt

European Patent Office

Office européen des brevets

(19)

(11) Veröffentlichungsnummer: **0 072 946**
**B1**

(12) # EUROPÄISCHE PATENTSCHRIFT

(45) Veröffentlichungstag der Patentschrift:
29.05.85

(51) Int. Cl.⁴: **C 04 B 22/00**

(21) Anmeldenummer: 82107087.7

(22) Anmeldetag: 05.08.82

(54) Verfahren zur Erstarrungsbeschleunigung von hydraulischen Zementmischungen.

(30) Priorität: 20.08.81 DE 3132928

(43) Veröffentlichungstag der Anmeldung:
02.03.83 Patentblatt 83/9

(45) Bekanntmachung des Hinweises auf die Patenterteilung:
29.05.85 Patentblatt 85/22

(84) Benannte Vertragsstaaten:
BE DE FR GB IT NL

(56) Entgegenhaltungen:
US - A - 1 554 184

CHEMICAL ABSTRACTS, Band 95, Nr. 8, 24. August
1981, Seite 293, Nr. 66703z, Columbus, Ohio, USA
JING-XIONG GUO et al.: "Study on the reaction
mechanism of zeolite in the hydration of cement"
CHEMICAL ABSTRACTS, Band 91, Nr. 16, 15. Oktober
1979, Seite 289, Nr. 127990g, Columbus, Ohio, USA A.I.
OVCHINNIKOVA et al.: "Study of the physicomechanical
properties of zeolite adsorbent granules with the use of
mineral binders"
CHEMICAL ABSTRACTS, Band 93, Nr. 24, 15. Dezember
1980, Seite 263, Nr. 224787v, Columbus, Ohio, USA

(73) Patentinhaber: Degussa Aktiengesellschaft,
Weissfrauenstrasse 9, D-6000 Frankfurt am Main 1 (DE)

(72) Erfinder: Diehl, Manfred, Dr., Zeisselstrasse 7,
D-6000 Frankfurt am Main 1 (DE)
Erfinder: Bergmann, Roland, August-Bebel-Strasse 2d,
D-6450 Hanau 11 (DE)

## Beschreibung

Die Erfindung betrifft ein Verfahren zur Erstarrungsbeschleunigung von hydraulischen Zementmischungen durch Zusatz von kristallinen Zeolithen.

Erstarrungsbeschleuniger führen zu einer deutlichen Beschleunigung des Erstarrens von Zementmischungen aus hydraulischen Bindemitteln und Zuschlagstoffen verschiedener Art. Die beschleunigende Wirkung der Zusatzmittel ist z. B. besonders gefragt bei Spritzbeton, beim Abdichten von Wassereinbrüchen und beim Einsetzen von Ankereisen.

Zusätze dieser Art für zementgebundene Baustoffe sind demnach von wirtschaftlichem und technischem Interesse.

Es ist bereits bekannt, als Zusatzmittel zur beschleunigten Verfestigung von hydraulischen Zementmischungen Calciumchlorid zu verwenden. Jedoch führt dieser Zusatz zu verstärktem »Kriechen« von Beton und fördert in gefährlicher Weise die Korrosion von Metallbewehrungen. Der Einsatz von Calciumchlorid ist daher ebenso wie auch der anderer Chloride in Deutschland verboten.

Es ist weiterhin bekannt, hydraulisch erhärtenden Zementgemischen andere Calcium-Salze wie Calciumthiosulfat (K. Murakami et al Yogyo Kyokai Shi 1968, 76, 373—383, Chem. Abstr. 70, (1969) 90 486), Calciumsulfamat DE-A 2 053 308), Calcium-Nitrit (FR-A 1 498 369), zu verwenden. Andere organische und anorganische Stoffe haben wegen ihrer begrenzten Wirksamkeit bisher nur mäßiges Interesse gefunden.

Auch Calciumformiat ist mehrfach als Abbinde- und Erstarrungsbeschleuniger für hydraulische Zementgemische vorgeschlagen worden (DE-A 1 963 375 und DE-B 1 232 861). Weil diese Substanz aber — vor allem bei zu hoher Dosierung — ein zu rasches Erstarren der Zementmischungen bewirkt und weil sich seine Beschleunigungswirkung nur auf die Frühphase des Abbindevorganges beschränkt, ist die praktische Anwendung des Calciumformiats begrenzt geblieben.

Calciumthiocyanat verfügt ebenfalls über eine beschleunigende Wirkung bei hydraulischen Zementgemischen. Im Vergleich zu Calciumformiat besteht dabei sogar weniger die Gefahr zu raschen Erstarrens. Außerdem wird mit Calciumthiocyanat auch eine merkliche Erhärtungsbeschleunigung erreicht. Für einen breiten Einsatz in Zementgemischen ist aber Calciumthiocyanat nicht geeignet, weil seine starke Hydroskopizität seine Handhabbarkeit beeinträchtigt und somit das Zumischen zu trockenem Zement ausschließt. Darüber hinaus besteht bei höheren Zugabemengen Korrosionsgefahr für die Betonarmierungen. Nicht zuletzt ist Calciumthiocyanat bei einer breiten Anwendung wegen der hohen Zugabemengen sehr kostspielig.

Es ist weiterhin bekannt, wasserunlösliche aktive Kieselsäuren oder kieselsäurehaltige Materialien zur Herstellung von wasser- und öldurchlässigen Betonbauteilen hydraulisch erhärtenden Zementmischungen zuzusetzen. Eine beschleunigte Verfestigung wurde dabei nicht festgestellt (DE-C 1 646 437).

Trialuminiumphosphate mit einem $Al_2O_3$ : $P_2O_5$-Verhältnis von 1 : 1 wirken in niedrigen Zusatzmengen bis ca. 1% als Abbindeverzögerer, während es bei höheren Mengen beschleunigend wirkt. Bei einer Zusatzmenge von 1,5% wird jedoch das Maximum erreicht. Die engen Wirksamkeitsgrenzen erfordern ein genaues Einhalten der vorgeschriebenen Mengen. Dies führt aber in der Praxis häufig zu Schwierigkeiten.

In der Kuei Suan Yen Hsueh Pao 1980, 8(3) 244-58 (C.A. 95, 1981, 66 703z) werden die Beeinflussung der Hydration einer gesättigten Kalklösung durch Zeolith und in der US-A-1 554 184 die Erhärtungsbeschleunigung von gelöschtem Kalk durch Zeolith beschrieben.

In Chemical Abstracts, Band 91, Nr. 127 990g ist die Zementbindung von granuliertem Zeolith, der als Adsorptionsmittel dient, beschrieben und in Chemical Abstracts Band 93, Nr. 224 787v wird zwar über eine Zusammensetzung auf Calciumsulfoaluminatbasis mit einem Gehalt an Zeolith neben Hochofenschlacke als Zementkomponente berichtet, doch enthält diese Mischung auch eine größere Menge Gips. Bezogen auf die angegebenen Trockenbestandteile beträgt der Gehalt an Zeolith etwas über 10%.

Es war Aufgabe der Erfindung, ein Zusatzmittel zu finden, welches die Nachteile der vorgenannten Stoffe bei guter Beschleunigungswirkung nicht besitzt.

Es wurde nun gefunden, daß die Verwendung von kristallinem, pulverförmigem Zeolith in hydraulischen Mischungen aus Zement und Zuschlagstoffen zur Erstarrungsbeschleunigung führt.

Gegenstand der Erfindung ist ein Verfahren zur Erstarrungsbeschleunigung von hydraulischen Mischungen aus Zement und Zuschlagstoffen, das dadurch gekennzeichnet ist, daß man 0,2 bis 10 Gew.-% eines pulverförmigen, kristallinen Zeoliths, bezogen auf die Gesamtmischung, einsetzt.

In einer bevorzugten Ausführungsform des Verfahrens kann man einen pulverförmigen Zeolithen des Typs A, der gemäß DE-A 2 447 021, DE-A 2 517 218, DE-A 2 651 419, DE-A 2 651 420, DE-A 2 651 436, DE-A 2 651 437, DE-A 2 651 445 und/oder DE-A 2 651 485 hergestellt wurde und die dort aufgeführten Teilchengrößenverteilung aufweist, einsetzen.

Die Beschleunigungswirkung dieses Zusatzmittels beschränkt sich nicht nur auf die Frühphase des Abbindevorganges. Außerdem weist das Verfahren die Vorteile auf, daß Zeolith des Typs A leicht handhabbar und auch bei Zugabe von hohen Mengen noch kostengünstig sind.

Das Zusatzmittel kann dem Zement vorher oder der hydraulischen Zementmischung während des Anmischens zugesetzt werden. In weiteren bevorzugten Ausführungsformen können in gleicher Weise auch Zeolithe der Typen P und X eingesetzt werden. Es zeigt sich, daß in allen Fällen gleichzeitig die Endfestigkeit der ausgehärteten Mischung entweder gleichbleibt oder aber sogar steigt.

Die Erfindung wird anhand der folgenden Beispiele erläutert:

Als Maß für die Erstarrung der zu prüfenden Zementmischungen dient die Eindringtiefe eines Probenkörpers, die mit einem SNR Penetrometer PNR 6 bestimmt wird. Die Eindringtiefen werden nach 2 und 4 Stunden unter Verwendung eines Meßkörpers von 13 Gramm, nach 6 Stunden mit einem Meßkörper von 31,7 g gemessen, da nach 6 Stunden mit dem leichteren Meßkörper keine brauchbaren Eindringtiefen mehr ermittelt werden können.

In den Tabellen ist jeweils die prozentuale Änderung der Versuchsmischungen mit Zeolith gegenüber der Vergleichsmischung ohne Zeolith angegeben.

Die Vergleichsmischung besteht aus 50 g Zement, 150 g Sand und 50 g Wasser. Bei Zugabe von pulverförmigem kristallinem Zeolith wird die gleiche Menge an Sand weniger eingewogen, um den Feststoffanteil der Proben konstant zu halten.

Entsprechend wird bei den Versuchen der Wassergehalt des eingesetzten Zeoliths berücksichtigt und dem Gemenge entsprechend weniger Wasser zugesetzt. Eine Veränderung der Viskosität tritt nach der Zugabe von Zeolith zu dem Grundgemenge nicht auf.

Eine Verschlechterung anderer Eigenschaften des Betons z. B. der Bruchfestigkeit aufgrund der Zumischung von kristallinem Zeolith wurde ebenfalls nicht festgestellt. Es trat im Gegenteil sogar häufig eine Verbesserung auf.

Die Ergebnisse von Ausführungsbeispielen der Erfindung finden sich in den Tabellen 1 und 2. Verwendet werden ein Zeolith des Typs A, der gemäß DE-A 2 651 485 hergestellt wurde und die dort aufgeführte Teilchenverteilung aufweist, und Zeolithe der Typen X und P.

Die Ergebnisse aus der Tabelle 1 zeigen deutlich die mit zunehmendem Zeolithgehalt bei gleicher Abbindezeit abnehmenden Eindringtiefen und damit die Wirksamkeit von Zeolith A als Abbindebeschleuniger.

Tabelle 1

| Gew.-% Zeolith Typ A | 2 h (13 g) | 4 h (13 g) | 6 h (31,7 g) |
|---|---|---|---|
| 0,2 | 4,3 | 54,6 | 10,3 |
| 0,5 | 14,4 | 54,9 | 21,4 |
| 1,0 | 15,5 | 67,8 | 32,5 |
| 5,0 | 63,9 | 71,7 | 62,4 |
| 10,0 | 80,1 | 91,0 | 83 |

Tabelle 1 Eindringtiefe (prozentuale Änderung) nach verschiedenen Abbindezeiten.

Tabelle 2 zeigt die Wirksamkeit von Zeolithen der Typen X und P als Abbindebeschleuniger

Tabelle 2

| | Gew.-% Zeolith | 2 h (13 g) | 4 h (13 g) | 6 h (31,7 g) |
|---|---|---|---|---|
| Zeolith X | 1 | 9 | 2,4 | 6,8 |
| Zeolith P | 1 | 19 | 11,1 | 30,3 |

Eindringtiefe (prozentuale Änderung) nach verschiedenen Abbindezeiten.

**0 072 946**

Tabelle 3 zeigt die Belastbarkeit der mit und ohne Zusatz von Zeolith ausgehärteten Zementmischungen.

Tabelle 3

|  | Belastbarkeit (kg) |
|---|---|
| Vergleichsversuch ohne Zeolith | 36 |
| 1 Gew.-% Zeolith X | 49 |
| 1 Gew.-% Zeolith P | 70 |
| 1 Gew.-% Zeolith A | 57 |

## Patentansprüche

1. Verfahren zur Erstarrungsbeschleunigung von hydraulischen Mischungen aus Zement und Zuschlagstoffen, dadurch gekennzeichnet, daß man 0,2 bis 10 Gew.-% eines pulverförmigen kristallinen Zeoliths, bezogen auf die Gesamtmischung, zusetzt.

2. Verfahren nach Anspruch 1, dadurch gekennzeichnet, daß man einen pulverförmigen, kristallinen Zeolith des Typs A einsetzt.

3. Verfahren nach Anspruch 1, dadurch gekennzeichnet, daß man einen pulverförmigen, kristallinen Zeolith des Typs X einsetzt.

4. Verfahren nach Anspruch 1, dadurch gekennzeichnet, daß man einen pulverförmigen, kristallinen Zeolith des Typs P einsetzt.

## Claims

1. Process for accelerating the solidification of hydraulic mixtures of cement and additives, characterised in that from 0.2 to 10% by weight of a pulverulent crystalline zeolite based on the total mixture is added.

2. Process according to claim 1, characterised in that a pulverulent crystalline zeolite of type A is used.

3. Process according to claim 1, characterised in that a pulverulent crystalline zeolite of type X is used.

4. Process according to claim 1, characterised in that a pulverulent crystalline zeolite of type P is used.

## Revendications

1. Procédé pour accélérer le durcissement des mélanges hydrauliques de ciment et d'agrégats, caractérisé en ce que l'on ajoute 0,2 à 10% en poids, calculé sur le mélange total, d'une zéolithe cristalline en poudre.

2. Procédé suivant la revendication 1, caractérisé en ce qu'on met en oeuvre une zéolithe cristalline, en poudre, du type A.

3. Procédé suivant la revendication 1, caractérisé en ce qu'on met en oeuvre une zéolithe cristalline, en poudre, du type X.

4. Procédé suivant la revendication 1, caractérisé en ce qu'on met en oeuvre une zéolithe cristalline, en poudre, du type P.

4